# EUROPEAN PATENT SPECIFICATION

(11) **EP 3 702 569 B1**
(45) Date of publication and mention of the grant of the patent: **29.11.2023**
(21) Application number: 18871271.5
(22) Date of filing: 25.09.2018
(51) Int. Cl.: E05F 15/60, H02K 16/04, H02K 41/02

(54) **LINEAR MOTOR SYSTEM FOR SLIDING DOOR**
LINEARMOTORSYSTEM FÜR SCHIEBETÜR
SYSTÈME DE MOTEUR LINÉAIRE POUR PORTE COULISSANTE

(30) Priority: 26.10.2017 CN 201711021316; 26.10.2017 CN 201721391875 U
(43) Date of publication of application: 02.09.2020
(73) Proprietor: Zhongshan Opike Hardware Product Co., Ltd, Zhongshan, Guangdong 528403 (CN)
(72) Inventor: XU, Jiangde, Zhongshan Guangdong 528403 (CN)
(74) Representative: Petraz, Gilberto Luigi
(86) International application number: PCT/CN2018/107200
(87) International publication number: WO 2019/080684

(56) References cited:
- EP-A2- 2 181 495
- EP-A2- 2 476 849
- CN-A- 101 779 369
- CN-A- 108 179 945
- CN-U- 202 810 476

## Description

### Field of the invention

The present invention relates to a component for a sliding door and in particular to a linear motor system for a sliding door and belongs to a production technology for hardware fittings for building decoration.

### Background of the invention

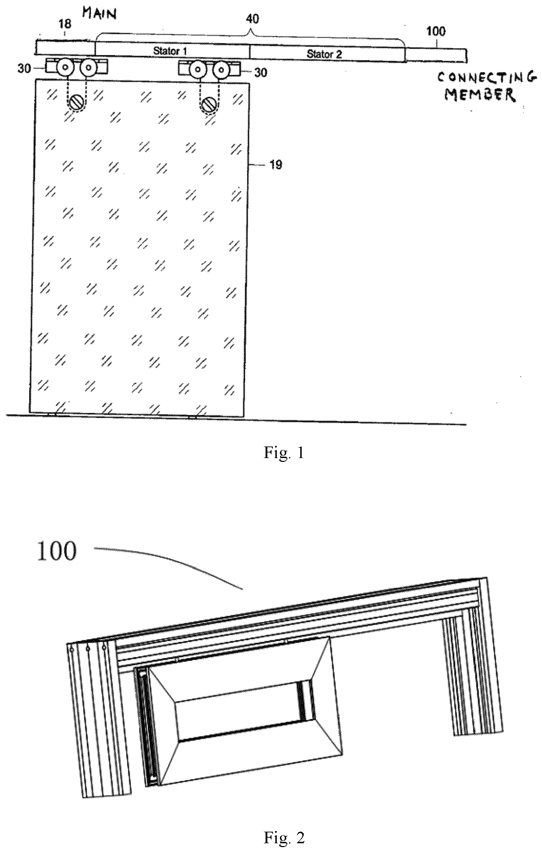

A sliding door is driven by a linear motor, so that a transmission structure such as a belt is reduced, the occupied space is small, friction and noise are reduced, automatic intelligence is realized, and use demands of users for automatic doors may be increased to a great extent. A linear motor disclosed in CN200880102725.4 is shown as Fig. 1. the first stator and the second stator are symmetrically arranged in the middle of the door body, rotor members are arranged below the first stator and the second stator. Since the stators have to be effectively connected with a row of magnets of the rotor members at any time points, the power supply and the connecting member cannot be arranged at one end of the linear driver, and are respectively arranged at two sides of the two stators. Therefore, the linear motor such a layout has the following problems: firstly, the connecting wire of the first stator can be connected with the connecting member only when crossing over the second stator to realize control on current power of the first stator, so that the overall wiring becomes complex. Secondly, the stator located in the middle of the door body can provide an enough driving force only when aligning about six coil groups to the rotor members on the door body, and the driving force can be controlled only when the inductor on the stator induces the rotor members. In Fig. 1, when the door body and the rotor members slide to left or right side, the driving force is small, and the sliding range of the door body without departing from the driving force is limited, so that different sliding ranges of different door bodies cannot be achieved, and the inductor signal may not be detected when the door body slides to two sides.

EP2181495A2 discloses a linear motor arrangement for panels, in particular sliding door leaves, movable along a travel path. The arrangement includes at least one stator member of a linear motor and a connecting member as components. The connecting member comprises a circuitry. The components are consecutively disposed in a row. Furthermore, the connecting member has a housing, which, at one end, has at least one connection possibility for an external energy supply. In addition, the housing, respectively the connecting member is adapted, to receive circuitry, which has additional terminals. In order to be able to run connecting lines in the connecting member, a channel is configured in the housing such that they are led out of the housing at the end of the connection possibility

EP2476849A2 discloses a profile having accommodating chambers between which a recess and a through-hole are arranged. One of the chambers movably accommodates a rotor of a linear motor along a preset traverse path and fixedly accommodates a stator of the linear motor. The other chamber fixedly accommodates a linear motor-controller for electromagnetic interaction of the rotor and stator. The recess and through-hole enable outward mechanically protected placement of energy- and/or supply lines i.e. cables, that are coupled between the rotor or stator and controller.

### Summary of invention

The present invention aims at solving technical problems of wiring complexity, detection difficulty and poor range adaptability of a linear motor system for a sliding door.

For solving the above-mentioned technical problems, the present invention adopts a technical solution as follows: a linear motor system for a sliding door includes a mover assembly connectable with a door body of the sliding door, a control assembly and at least two stator assemblies, wherein the control assembly is configured to control the movement of the mover assembly and is arranged between two stator assemblies in the at least two stator assemblies.

On one hand, the two stator assemblies are closer to two sides of the door body than those in the prior art, and when the mover assembly connected with the door body of the sliding door moves towards the two sides for a relatively long distance, the mover assembly and the stator assemblies are still effectively connected and detected, namely the distance that the door body slides towards the two sides is increased, it is more convenient to realize detection; and on the other hand, the two stator assemblies can be respectively in direct electric connection with the control assembly located between the two stator assemblies without enabling a wire to cross over a certain component, and therefore the arrangement of wire is simpler.

Further, the linear motor system further includes an adaptor and a power supply, and the adaptor and the power supply are respectively connected with ends, close to outer sides, of the stator assemblies far away from two ends of the control assembly in the at least two stator assemblies. In the layout of the power supply, the stator assemblies, the control assembly and the adaptor in the linear motor system, the control assembly is located at a position closer to the middle, and the two ends of the control assembly are both connected with the stator assemblies, and the power supply and the adaptor which have less to do with control and detection are located at positions close to the outer side, so that the simplicity of wiring and detection is further guaranteed through overall layout.

Preferably, the two ends of the control assembly are provided with connecting ports, and the connecting ports are respectively in electric connection with the stator assemblies. Therefore, the arrangement that the control assembly is provided with the two connecting ports at left and right ends is different from the prior art, and the two ports are respectively connected with the stator assemblies.

Preferably, the connecting ports are further respectively in physical connection with the stator assemblies. The connecting ports may form physical connection, so that wire connection between the control assembly and the stator assemblies is omitted, and furthermore, the linear motor is enabled to be simple as a whole and simple in wiring.

Preferably, the connecting ports are provided with first connecting parts and second connecting parts, the first connecting parts are configured to be in electric connection with the stator assemblies, and the second connecting parts are respectively in detachable physical connection with the stator assemblies. By adopting structures of the connecting ports, the first connecting parts and the second connecting parts may be separately replaced, so that the control assembly is convenient to disassemble and assemble.

Preferably, the control assembly is provided with a circuit board, the circuit board is installed along a length direction of the stator assemblies, and the first connecting parts are respectively arranged at two ends of the circuit board. Due to the adoption of the structure, wires do not need to be arranged inside the control assembly, the overall circuit board is stable and reliable in performance and simple and single in structure and meets a design demand.

Preferably, the first connecting parts are respectively welded at two ends of the circuit board.

Preferably, the sliding door is provided with a section bar, an internal space of the section bar is divided into two parts in a vertical direction, and the stator assemblies, the control assembly, the adaptor and the power supply are installed inside one part of the section bar in an end-to-end connection manner. If such a structural section bar and installation way are adopted, the packaged members are only required to be connected and inserted to the section bar by installation personnel during the installation of a sliding door, so that the installation efficiency is greatly increased.

Preferably, the mover assembly is provided with a wheel set and installed inside the other part of the section bar, and is opposite to the stator assemblies vertically, and the mover assembly slides inside the section bar through the wheel set.

Preferably, the wheel set is arranged at both left and right sides of the mover assembly, and the inside of the section bar is provided with ribs matched with the wheel set. Due to the adoption of the structure, the mover assembly can stably and smoothly slide in the section bar.

### Brief description of the drawings

Fig. 1 is a schematic diagram of a linear motor for a sliding door in the prior art;
Fig. 2 is a schematic diagram of a use state of a sliding door in an embodiment of the present invention;
Fig. 3 is an explosive diagram of the sliding door in an embodiment of the present invention;
Fig. 4 is an assembly stereogram of a control assembly and stator assemblies in an embodiment of the present invention;
Fig. 5 is a connecting relationship view of all components in an embodiment of the present invention;
Fig. 6 is a stereogram of the control assembly in an embodiment of the present invention;
Fig. 7 is an explosive view of the control assembly in an embodiment of the present invention;
Fig. 8 is a side view of the control assembly in an embodiment of the present invention; and
Fig. 9 is a sectional view of the sliding door in an embodiment of the present invention.

### Description of Reference Numerals:

| | |
|---|---|
| sliding door | 100 |

| | |
|---|---|
| upper door frame | 1 |
| upper component | 2 |
| section bar | 3 |
| mover assembly | 4 |
| sliding door body | 5 |
| side door frame | 6 |
| control assembly | 11 |
| first connecting part | 111 |
| second connecting part | 112 |
| housing | 113 |
| circuit board | 114 |
| stator assembly | 12 |
| third connecting part | 121 |
| fourth connecting part | 122 |
| two-position to four-position terminal wire | 13 |
| power supply | 14 |
| four-position terminal connecting wire | 15 |
| adaptor | 16 |
| rib | 17 |
| wheel set | 18 |

### Detailed description of illustrated embodiments

The specific implementation of the present invention is further described in detail below in combination with accompanying drawings and embodiments. The following embodiments are intended to explain the present invention, rather than to limit the scope of the present invention.

The present invention provides a linear motor system for a sliding door, including a mover assembly connected with a door body, a control assembly and at least two stator assemblies, wherein the control assembly is configured to control the movement of the mover assembly and is arranged between the two stator assemblies in the at least two stator assemblies.

In the technical solution, the control assembly is arranged between the stator assemblies, on one hand, the two stator assemblies are closer to two sides of the door body than those in the prior art, when the mover assembly connected with the door body moves towards two sides for a relatively long distance, the mover assembly and the stator assemblies are still be effectively connected and detected, namely the distance that the door body slides towards the two sides is increased, so that it is more convenient to realize detection; and on the other hand, the two stator assemblies can be respectively in direct electric connection with the control assembly located between the two stator assemblies without enabling a wire to cross over a certain component, and therefore the wiring way is simpler.

In order to make the above-mentioned purposes, features and advantages of the present invention clearer and more understandable, specific embodiments of the present invention are described in detail below in combination with the accompanying drawings.

Fig. 2 shows a use state of a sliding door 100 in an embodiment, a user can control a linear motor to drive a door body 5 to automatically slide left and right in a way such as induction and push-and-pull starting. An upper end of the sliding door 100 is horizontally provided with an upper door frame 1, the upper door frame 1 is fixedly arranged on an upper beam of the door or a wall by using bolts, two sides of the upper door frame 1 are vertically provided with side door frames 6, and the upper door frame 1 and the left and right side door frames 6 are connected to form an overall door frame. The upper door frame 1 and the side door frames 6 may both adopt metal section bars molded by extrusion.

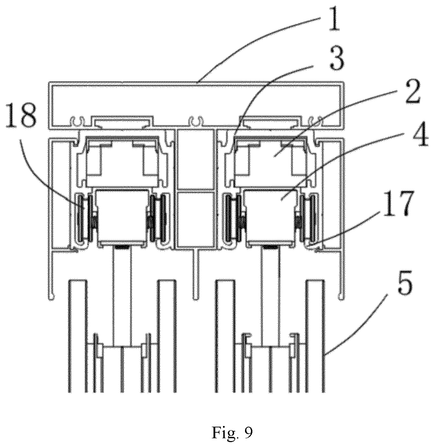

As shown in Fig. 9, the upper door frame 1 is T-shaped, a horizontal part on the T-shaped upper door frame 1 is fitted and fixed together with the wall, two vertical sides of the T-shaped upper door frame 1 are provided with section bars 3 for installing two doors. Each of the section bars 3 is divided into upper part and lower part in a vertical direction, an upper component 2 is accommodated in the upper part, and the lower part is used for accommodating a mover assembly 4. Lower end of the mover assembly 4 is connected with the door body 5. The door body 5 slides along with the movement of the mover assembly 4.

The sliding door belongs to, but is not limited to an upper load-bearing automatic door and may also adopt other upper load-bearing automatic doors, lower load-bearing automatic doors or other types of automatic doors in the present embodiment.

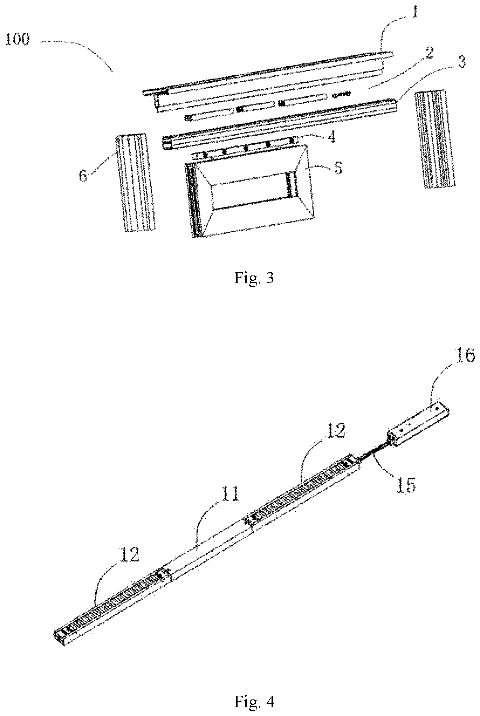

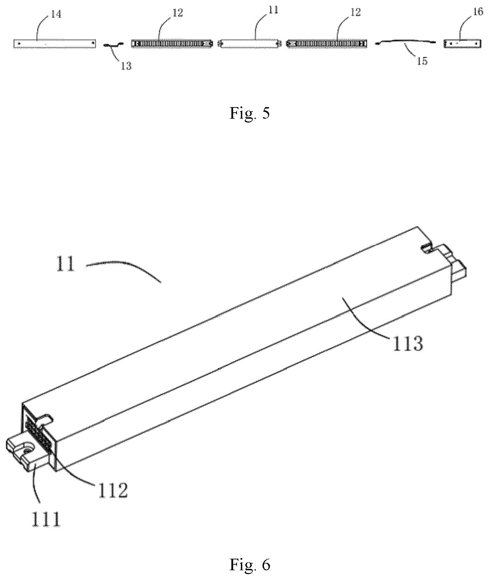

As shown in Fig. 5, the upper component 2 includes a control assembly 11 and stator assemblies 12. In the present embodiment, two stator assemblies 12 are specifically provided. As shown in an assembly diagram of the control assembly 11 and the stator assemblies 12 in Fig. 4, the two stator assemblies 12 are arranged at two ends of the control assembly 11. The stator assemblies 12 are internally provided with iron cores and coils winding the iron cores, the mover assembly 4 is internally provided with magnets, and the stator assemblies 12 and the mover assembly 4 are located oppositely, so that a magnetic field generated when current passes through the coils generates a driving force for the mover assembly 4 with the magnets.

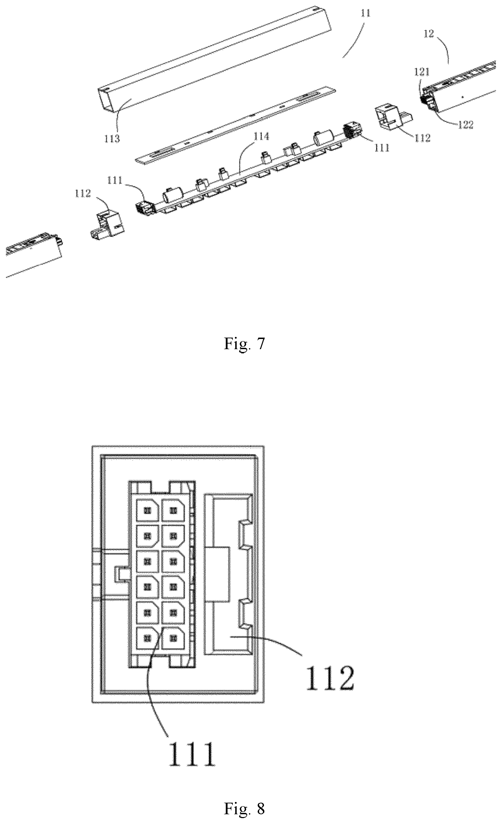

In a preferred embodiment, two ends of the control assembly 11 are respectively designed with connecting ports, and ends, close to the control assembly 11, of the left and right stator assemblies 12 are provided with ports electrically connected with the connecting ports of the control assembly 11, so that the control assembly is in electric connection with the stator assemblies 12 at the left and right sides, as shown in Fig. 7.

By adopting the connecting ports, the physical connection between the control assembly 11 and the stator assemblies 12 may also be realized.

Further, in a preferred embodiment, as shown in Figs. 7-8, the connecting ports of the control assembly 11 are provided with first connecting parts 111 and second connecting parts 112, and the ports of the stator assemblies 12 are provided with third connecting parts 121 and fourth connecting parts 122. Specifically, the first connecting parts 111 are provided with sockets for electric connection, and the third connecting parts 121 are correspondingly provided with plugs for electric connection. The second connecting parts 112 are provided with plugging parts protruding outwards, and the fourth connecting parts 122 are correspondingly provided with slots for inserting the plugging parts, so that the second connecting parts 112 are respectively in detachable physical connection with the stator assemblies 12.

Figs. 6-7 show specific structures of the control assembly 11. An outer part of the control assembly 11 is wholly wrapped by a housing 113, and other components and parts of the control assembly 11 (including a circuit board 114) are installed in the housing 113. The circuit board 114 is installed in the housing 113 along a length direction of the stator assemblies 12. A surface of the circuit board 114 is provided with various power components for controlling the movement speed of the mover assembly 4 and the opening or closing of an electric door.

The two first connecting parts 111 are respectively arranged at two ends of the circuit board 114, and preferably, the first connecting parts 111 are welded at two ends of the circuit board 114. The circuit board 114 is provided with welding points, so that wire is not needed, the surface of the overall circuit board 114 is simple, and technical problems of the present invention may be effectively solved. The second connecting parts 112 are provided with housing structures, internal through-holes are formed inside the housings, the first connecting parts 111 are accommodated in the through-holes and pass through the through-holes to be connected with the third connecting parts 121 of the stator assemblies 12. The plugging parts of the second connecting parts 112 are formed by protruding from the housings to the sides of the stator assemblies 12. Accordingly, the fourth connecting parts 122 of the stator assemblies 12 are provided with the slots for inserting the plugging parts of the second connecting parts 112. In the present embodiment, the fourth connecting parts 122 are divided into upper parts and lower parts, spaces allowing the plugs of the third connecting parts 121 to pass through are formed in middles after the upper parts and the lower parts are buckled, and the third connecting parts 121 are fixed after the upper parts and the lower parts are buckled.

In the present embodiment, connecting ports at two ends of the control assembly 11 are formed by the first connecting parts 111 and the second connecting parts 112 and are used for electric connection and physical connection between the control assembly 11 and each of the stator assemblies 12 at the two sides of the control assembly. Due to the adoption of the structure, the control assembly 11 is enabled to be effectively connected with the two stator assemblies, the wiring trouble is omitted, and connection with other structures inside and outside the control assembly 11 by adopting a wire is not needed. Moreover, the first connecting parts 111 and the second connecting parts 112 are easy to disassemble, and therefore, maintenance and replacement are simple.

It should be noted that when the two ends of the control assembly 11 are electrically connected with the stator assemblies 12 by only adopting wires or other structures, namely no physical connection exists, the control assembly 11 and the two stator assemblies 12 are connected without crossing over other structures, and the control assembly 11 is located between the stator assemblies 12, so that the difficulty in wiring and detection of the linear motor system may still be solved to a certain extent.

In a preferred embodiment, the linear motor system for the sliding door further includes an adapter 16 and a power supply 14, as shown in Fig. 5. The adapter 16 and the power supply 14 are respectively arranged at two outer sides of the upper component 2 and are electrically connected with the two stator assemblies 12. Thus, it is further determined that the control assembly 11 is located in the middle of the overall upper component 2, and wiring and detection are convenient.

The power supply 14 is connected with the left stator assembly 12 through a two-position to four-position terminal wire 13, and the adaptor 16 is connected with the right stator assembly 12 through a four-position terminal connecting wire 15. The corresponding connection ends of the power supply 14, the adaptor 16 and the stator assemblies 12 are provided with ports for inserting or pulling the two-position to four-position terminal wire 13 or the four-position terminal connecting wire 15.

The power supply 14 and the adaptor 16 may also be directly connected with the stator assemblies 12 without connecting wires, so that the overall upper component 2 is simpler.

The power supply 14 is configured to supply power for the linear motor of the overall sliding door 100 and is provided with an external cable connecting port for inserting or pulling an external cable at the end on the right-most side of the door body. The adaptor 16 is configured to expand the function of the automatic door and is provided with a reserved functional interface such as a wireless Bluetooth connection or an infrared induction interface, so as to improve an expansion function of the system.

When the overall structure formed therefrom is installed, a wiring process is omitted, the installation efficiency of installation personnel is improved, the installation becomes simple and clear, and the market demand is met.

The sliding door is provided with the section bar, the inside of the section bar is divided into two parts in a vertical direction, and the stator assemblies, the control assembly, the adaptor and the power supply are installed inside one part of the section bar in an end-to-end connection way.

In a preferred embodiment, a relative installation relationship between the upper component 2 and the mover assembly4 is further described. When the linear motor is installed on the door body for driving, the upper component 2 is of an overall strip shape formed by end-to-end connection of the power supply 14, the two-position to four-position terminal wire 13, the left stator assembly 12, the control assembly 11, the right stator assembly 12, the four-position terminal connecting wire 15 and the adaptor 16, which is relatively fixed in upper space of the section bar 3. The mover assembly 4 is provided with a long strip-shaped housing in which the magnet row is arranged, two sides outside the housing are provided with the wheel set 18 formed by wheels. Multiple wheel sets 18 may be arranged at a certain interval along a length direction of the housing of the mover assembly 4, and the wheel set 18 in the present embodiment adopt concave wheels. The mover assembly 4 is plugged into the lower space of the section bar 13 together with the wheel set 18 from the end of the section bar 3 and is opposite to the upper component 2 vertically, as shown in Fig. 9. The lower space of the section bar 3 is internally provided with four ribs 17, wherein the left and right ribs 17 at the bottom of the power space are formed by inwards bending the bottom edge of the section bar 3, and the bending direction is vertically upward. The protruding direction of the ribs 17 located in the middles of the section bar 3 is just opposite to that of the two ribs 17 at the bottom. Therefore, the four ribs 17 are matched with the grooves of the concave wheels of the wheel set, so that the mover assembly 4 slides inside the section bar through the wheel set.

The mover assembly 4 is connected with the door body 5 of the sliding door, and the above-mentioned structure may drive the door body 5 to smoothly slide left and right.

The wheel set 18 may also adopt flat wheels, and the flat wheels abut against the ribs 17, which can achieve the sliding of the mover assembly 4.

In addition, three or more stator assemblies 12 may also be selected. When there are three stator assemblies 12, one end of the control assembly 11 is provided with two stator assemblies 12, and the other end of the control assembly 11 is provided with one stator assembly 12. When there are four stator assemblies 12, each of the two ends of the control assembly 11 is connected with two stator assemblies 12. The technical solution of the present invention may be used for solving the same technical problem under these conditions.

The above description is merely about the preferred embodiments of the present invention, it should be indicated that several improvements or replacements can be made by those of ordinary skill in the art without departing from the technical principle of the present invention, and these improvements and replacements should also be regarded to be within the protective scope of the appended claims.

## Claims

1. A linear motor system for a sliding door (100), comprising a mover assembly (4) connectable with a door body of the sliding door, a control assembly (11) and at least two stator assemblies (12), wherein the control assembly (11) is configured to control the movement of the mover assembly (4); **characterized in that** the control assembly (11) is arranged between two stator assemblies (12) in the at least two stator assemblies (12);
wherein the linear motor system further comprises an adaptor (16) and a power supply (14), wherein the adaptor (16) and the power supply (14) are respectively connected with ends, close to outer sides, of the stator assemblies (12) far away from two ends of the control assembly (11) in the at least two stator assemblies (12).

2. The linear motor system for the sliding door (100) according to claim 1, **characterized in that** two ends of the control assembly (11) are provided with connecting ports, and the connecting ports are respectively in electric connection with the stator assemblies (12).

3. The linear motor system for the sliding door (100) according to claim 2, **characterized in that** the connecting ports are further respectively in physical connection with the stator assemblies (12).

4. The linear motor system for the sliding door (100) according to claim 3, **characterized in that** the connecting ports are provided with first connecting parts (111) and second connecting parts (112), the first connecting parts (111) are configured to be in electric connection with the stator assemblies(12), and the second connecting parts (112) are respectively in detachable physical connection with the stator assemblies(12).

5. The linear motor system for the sliding door (100) according to claim 4, **characterized in that** the control assembly (11) is provided with a circuit board (114), the circuit board (114) is installed along a length direction of the stator assemblies (12), and the first connecting parts (111) are respectively arranged at two ends of the circuit board (114).

6. The linear motor system for the sliding door (100) according to claim 5, **characterized in that** the first connecting parts (111) are respectively welded at two ends of the circuit board (114).

7. A sliding door (100) provided with a linear motor system according to one of the previous claims , wherein the sliding door (100) is provided with a section bar, an internal space of the section bar (3) is divided into two parts in a vertical direction, and the stator assemblies (12), the control assembly (11), the adaptor (16) and the power supply (14) are installed inside one part of the section bar (3) in an end-to-end connection way.

8. The sliding door (100) according to claim 7, **characterized in that** the mover assembly (4) is provided with a wheel set (18), is installed inside the other part of the section bar, and are opposite to the stator assemblies (12) vertically, and the mover assembly (4) slides inside the section bar (3) through the wheel set (18).

9. The sliding door (100) according to claim 8, **characterized in that** the wheel set (18) is arranged at left and right sides of the mover assembly, and the section bar (3) is internally provided with ribs (17) matched with the wheel set (18).

## Patentansprüche

1. Linearmotorsystem für eine Schiebetür (100), umfassend eine Läuferanordnung (4), die mit einem Türkörper der Schiebetür verbindbar ist, eine Steuerungsanordnung (11) und zumindest zwei Statoranordnungen (12), worin die Steuerungsanordnung (11) dazu eingerichtet ist, die Bewegung der Läuferanordnung (4) zu steuern; **dadurch gekennzeichnet, dass** die Steuerungsanordnung (11) zwischen zwei Statoranordnungen (12) in den zumindest zwei Statoranordnungen (12) angeordnet ist;
worin das Linearmotorsystem ferner einen Adapter (16) und eine Stromversorgung (14) umfasst, worin der Adapter (16) und die Stromversorgung (14) jeweils mit Enden, die den Außenseiten nahe liegen, der Statoranordnungen (12) verbunden sind, die von zwei Enden der Steuerungsanordnung (11) in den zumindest zwei Statoranordnungen (12) weit weg liegen.

2. Linearmotorsystem für die Schiebetür (100) nach Anspruch 1, **dadurch gekennzeichnet, dass** zwei Enden der Steuerungsanordnung (11) mit Verbindungsanschlüssen versehen sind, und die Verbindungsanschlüsse jeweils in elektrischer Verbindung mit den Statoranordnungen (12) stehen.

3. Linearmotorsystem für die Schiebetür (100) nach Anspruch 2, **dadurch gekennzeichnet, dass** die Verbindungsanschlüsse ferner jeweils in physikalischer Verbindung mit den Statoranordnungen (12) stehen.

4. Linearmotorsystem für die Schiebetür (100) nach Anspruch 3, **dadurch gekennzeichnet, dass** die Verbindungsanschlüsse mit ersten Verbindungsteilen (111) und zweiten Verbindungsteilen (112) versehen sind, wobei die ersten Verbindungsteile (111) dazu eingerichtet sind, in elektrischer Verbindung mit den Statoranordnungen (12) zu stehen, und die zweiten Verbindungsteile (112) jeweils in abnehmbarer physikalischer Verbindung mit den Statoranordnungen (12) stehen.

5. Linearmotorsystem für die Schiebetür (100) nach Anspruch 4, **dadurch gekennzeichnet, dass** die Steuerungsanordnung (11) mit einer Leiterplatte (114) versehen ist, die Leiterplatte (114) entlang einer Längsrichtung der Statoranordnungen (12) installiert ist, und die ersten Verbindungsteile (111) jeweils an zwei Enden der Leiterplatte (114) angeordnet sind.

6. Linearmotorsystem für die Schiebetür (100) nach Anspruch 5, **dadurch gekennzeichnet, dass** die ersten Verbindungsteile (111) jeweils an zwei Enden der Leiterplatte (114) geschweißt sind.

7. Schiebetür (100), die mit einem Linearmotorsystem nach einem der vorhergehenden Ansprüche versehen ist, worin die Schiebetür (100) mit einer Profilstange versehen ist, wobei ein innerer Raum der Profilstange (3) in zwei Teile in einer vertikalen Richtung geteilt ist, und die Statoranordnungen (12), die Steuerungsanordnung (11), der Adapter (16) und die Stromversorgung (14) innerhalb eines Teils der Profilstange (3) in einer Ende-zu-Ende-Verbindungsweise installiert sind.

8. Schiebetür (100) nach Anspruch 7, **dadurch gekennzeichnet, dass** die Läuferanordnung (4) mit einem Radsatz (18) versehen ist, innerhalb des anderen Teils der Profilstange installiert ist, und den Statoranordnungen (12) vertikal gegenüberliegt, und die Läuferanordnung (4) innerhalb der Profilstange (3) durch den Radsatz (18) gleitet.

9. Schiebetür (100) nach Anspruch 8, **dadurch gekennzeichnet, dass** der Radsatz (18) an rechten und linken Seiten der Läuferanordnung angeordnet ist, und die Profilstange (3) innen mit Rippen (17) versehen ist, die zum Radsatz (18) passen.

## Revendications

1. Système de moteur linéaire pour une porte coulissante (100), comprenant un ensemble de déplacement (4) pouvant être relié à un corps de porte de la porte coulissante, un ensemble de commande (11) et au moins deux ensembles de stator (12), dans lequel l'ensemble de commande (11) est configuré pour commander le déplacement de l'ensemble de déplacement (4) ; **caractérisé en ce que** l'ensemble de commande (11) est agencé entre deux ensembles de stator (12) dans les au moins deux ensembles de stator (12) ;
dans lequel le système de moteur linéaire comprend en outre un adaptateur (16) et une alimentation électrique (14), dans lequel l'adaptateur (16) et l'alimentation électrique (14) sont respectivement connectés à des extrémités, proches de côtés extérieurs, des ensembles de stator (12) éloignés de deux extrémités de l'ensemble de commande (11) dans les au moins deux ensembles de stator (12).

2. Système de moteur linéaire pour la porte coulissante (100) selon la revendication 1, **caractérisé en ce que** deux extrémités de l'ensemble de commande (11) sont pourvues d'orifices de connexion, et les orifices de connexion sont respectivement en connexion électrique avec les ensembles de stator (12).

3. Système de moteur linéaire pour la porte coulissante (100) selon la revendication 2, **caractérisé en ce que** les orifices de connexion sont en outre respectivement en connexion physique avec les ensembles de stator (12).

4. Système de moteur linéaire pour la porte coulissante (100) selon la revendication 3, **caractérisé en ce que** les orifices de connexion sont pourvus de premières parties de connexion (111) et de secondes parties de connexion (112), les premières parties de connexion (111) étant configurées pour être en connexion électrique avec les ensembles de stator (12), et les secondes parties de connexion (112) étant respectivement en connexion physique détachable avec les ensembles de stator (12).

5. Système de moteur linéaire pour la porte coulissante (100) selon la revendication 4, **caractérisé en ce que** l'ensemble de commande (11) est pourvu d'une carte de circuit (114), la carte de circuit (114) étant installée le long d'une direction de longueur des ensembles de stator (12), et les premières parties de connexion (111) étant respectivement agencées au niveau de deux extrémités de la carte de circuit (114).

6. Système de moteur linéaire pour la porte coulissante (100) selon la revendication 5, **caractérisé en ce que** les premières parties de connexion (111) sont respectivement soudées au niveau de deux extrémités de la carte de circuit (114).

7. Porte coulissante (100) pourvue d'un système de moteur linéaire selon l'une des revendications précédentes, dans laquelle la porte coulissante (100) est pourvue d'une barre de section, un espace interne de la barre de section (3) est divisé en deux parties dans une direction verticale, et les ensembles de stator (12), l'ensemble de commande (11), l'adaptateur (16) et l'alimentation électrique (14) sont installés à l'intérieur d'une partie de la barre de section (3) de manière connectée de bout en bout.

8. Porte coulissante (100) selon la revendication 7, **caractérisée en ce que** l'ensemble de déplacement (4) est pourvu d'un jeu de roues (18) et installé à l'intérieur de l'autre partie de la barre de section, et est opposé aux ensembles de stator (12) verticalement, et l'ensemble de déplacement (4) coulisse dans la barre de section (3) à travers le jeu de roues (18).

9. Porte coulissante (100) selon la revendication 8, **caractérisée en ce que** le jeu de roues (18) est agencé sur les côtés gauche et droit de l'ensemble de déplacement, et la barre de section (3) est pourvue intérieurement de nervures (17) adaptées au jeu de roues (18).
